# EUROPEAN PATENT APPLICATION

(11) **EP 4 826 845 A1**
(43) Date of publication of application: **21.10.2026**
(21) Application number: 25867264.1
(22) Date of filing: 10.03.2025
(51) Int. Cl.: H01M 10/613, H01M 10/6568, H01M 10/6554

(54) **COOLING PLATE, DIRECT-COOLING ASSEMBLY AND BATTERY PACK**

(30) Priority: 30.12.2024 CN 202423298240 U
(71) Applicant: Eve Energy Co., Ltd., Huizhou, Guangdong 516000 (CN)
(72) Inventor: ZHAO, Yuhang, Huizhou, Guangdong 516006 (CN); ZHOU, Xiao, Huizhou, Guangdong 516006 (CN); YAN, Shiwei, Huizhou, Guangdong 516006 (CN); WANG, Yuanyuan, Huizhou, Guangdong 516006 (CN)
(74) Representative: Zimmermann, Tankred Klaus
(86) International application number: PCT/CN2025/081549
(87) International publication number: WO 2026/143855

(57) **Abstract**

The present application provides a cooling plate, a direct cooling assembly, and a battery pack. The cooling plate includes a cooling pipe, at least one pipe joint, and a sealing member. The at least one pipe joint is connected to an end of the cooling pipe to communicate with the cooling pipe, and the sealing member is arranged between the pipe joint and the end of the cooling pipe.

## Description

This application claims priority to Chinese Patent Application No. 202423298240.2 filed with the Chinese Patent Office on December 30, 2024, the entire contents of which are incorporated herein by reference.

### TECHNICAL FIELD

The present application relates to a technical field of batteries, and more particularly, to a soaking plate, a direct cooling assembly, and a battery pack.

### BACKGROUND

Thermal management is a focus of a new energy vehicle. As an energy density and a power density of a power battery of the new energy vehicle become higher and higher, the battery has an increase in thermal output. A heat dissipation system with characteristics of high cooling speed, high heat-transfer coefficient, and the like becomes more and more important. In related arts, the thermal management is mainly implemented in a large cylindrical battery pack by contacting a serpentine cooling plate with a side surface of the battery.

### SUMMARY

A serpentine cooling plate is high in cost. To reduce the cost, a current collector at both ends of a serpentine cooling pipe is replaced with a material such as plastic. However, the material such as plastic results in poor sealing performance of the serpentine cooling plate.

In a first aspect, the present application provides a cooling plate including:
a cooling pipe;
at least one pipe joint connected to an end of the cooling pipe to communicate with the cooling pipe; and
a sealing member disposed between the pipe joint and the end of the cooling pipe.

In a second aspect, the present application also provides a direct cooling assembly. The direct cooling assembly includes a cooling plate including:
a cooling pipe;
at least one pipe joint connected to an end of the cooling pipe to communicate with the cooling pipe; and
a sealing member disposed between the pipe joint and the end of the cooling pipe.

In a third aspect, the present application also provides a battery pack. The battery pack includes a direct cooling assembly, and the direct cooling assembly includes a cooling plate including:
a cooling pipe;
at least one pipe joint connected to an end of the cooling pipe to communicate with the cooling pipe; and
a sealing member disposed between the pipe joint and the end of the cooling pipe.

### BENEFICIAL EFFECT

According to technical solutions of the present application, a cooling pipe is configured to be in contact with a battery to cool the battery, a pipe joint is provided at an end of the cooling pipe to communicate with the cooling pipe, a sealing member is provided between the pipe joint and the cooling pipe, and the sealing member plays a sealing role. As such, the pipe joint and the cooling pipe are tightly connected to avoid a gap, thereby solving a technical problem of poor sealing performance of the cooling plate in related arts.

### BRIEF DESCRIPTION OF THE DRAWINGS

FIG. 1 is a schematic structural diagram of a cooling plate according to some embodiments of the present application;
FIG. 2 is a schematic exploded view of the cooling plate of FIG. 1;
FIG. 3 is a schematic enlarged view of part A in FIG. 2;
FIG. 4 is a schematic structural diagram of a pipe joint of FIG. 1;
FIG. 5 is a partial schematic structural diagram of a front view of the cooling plate of FIG. 1;
FIG. 6 is a sectional view along line B-B in FIG. 5;
FIG. 7 is a schematic enlarged view of part C in FIG. 6; and
FIG. 8 is a schematic enlarged view of part D in FIG. 6.

### Reference numerals:

100. cooling plate; 10. cooling pipe; 11. curved section; 12. connecting section; 13. sub-channel; 14. first end; 15. second end; 20. pipe joint; 21. receiving chamber; 22. liquid inlet pipe; 23. liquid outlet pipe; 24. first sub-flow passage; 25. second sub-flow passage; 30. sealing member; 31. snap-in protrusion; 40. glue layer; and 50. communication block.

### DETAILED DESCRIPTION OF THE EMBODIMENTS

In related arts, a thermal management is mainly implemented in a large cylindrical battery pack by contacting a serpentine cooling plate with a side surface of a battery. However, the serpentine cooling plate has a high cost. To reduce the cost, a current collector at both ends of a serpentine cooling pipe is replaced with a material such as plastic. However, the material such as plastic results in poor sealing performance of the serpentine cooling plate.

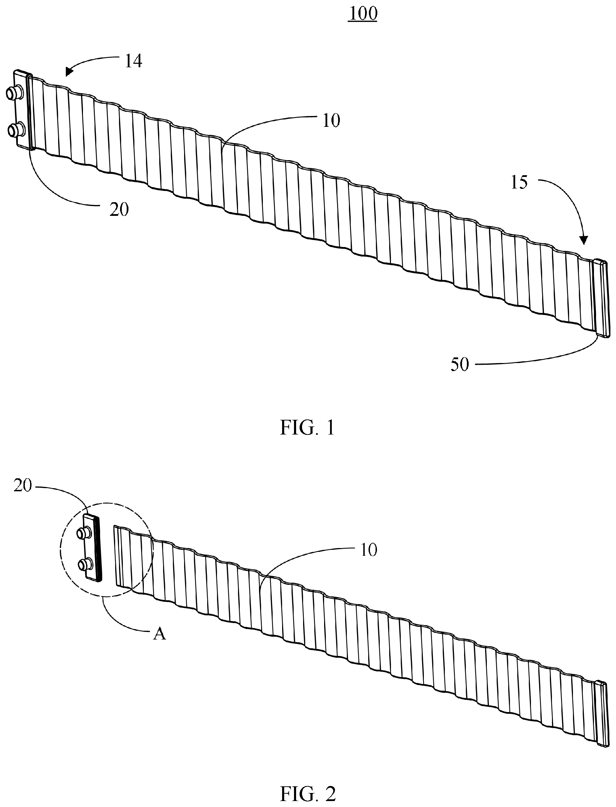

In view of the above, the present application provides a cooling plate 100. FIG. 1 to FIG. 8 are schematic structural diagrams of the cooling plate 100 provided in some embodiments of the present application. The cooling plate 100 provided in the present application is low in cost and has good sealing performance. The cooling plate 100 will be described in detail below with reference to the drawings.

Referring to FIGS. 1-3, a cooling plate 100 is provided, and the cooling plate 100 includes a cooling pipe 10, at least one pipe joint 20, and a sealing member 30. The at least one pipe joint 20 is connected to an end of the cooling pipe 10 to communicate with the cooling pipe 10. The sealing member 30 is provided between the pipe joint 20 and the end of the cooling pipe 10.

According to technical solutions of the present application, the cooling pipe 10 is configured to be in contact with a battery to cool the battery, the pipe joint 20 is provided at an end of the cooling pipe 10 to communicate with the cooling pipe 10, the sealing member 30 is provided between the pipe joint 20 and the cooling pipe 10, and the sealing member 30 functions as a sealing role. As such, the pipe joint 20 and the cooling pipe 10 are tightly connected to avoid a gap, thereby solving a technical problem of poor sealing performance of the cooling plate in related arts.

In some embodiments, the pipe joint 20 includes a plastic pipe joint, and the cooling pipe 10 includes a metal cooling pipe. The material of the pipe joint 20 is replaced by the material of plastic, so that the cost can be saved. At the same time, a main function of the pipe joint 20 is to transport a cooling medium to the cooling pipe 10, and the cooling pipe 10 is in contact with the battery to cool the battery. The material of the pipe joint 20 is replaced by the material of plastic, but the material of the cooling pipe 10 is still metal, which does not affect the cooling effect.

In some embodiments, the material of the pipe joint 20 may be any one of PA66 (polyhexamethylene adipamide), PPS (polyphenylene sulfide), PPE (polyphenylene ether plastic), and PA12 (polydodecanolactam), which have good heat resistance, corrosion resistance, and strength.

In some embodiments, the cooling plate 100 further includes a first end 14, and a liquid inlet end and a liquid outlet end are located at the first end 14, so that a length of the cooling passage can be extended for the cooling medium in the cooling passage flowing through a same battery at least twice in succession, thereby improving cooling efficiency and avoiding thermal runaway.

Alternatively, a receiving chamber 21 is defined in the pipe joint 20, and a partition plate is provided in the receiving chamber 21 to divide the receiving chamber 21 into a first sub-flow passage 24 and a second sub-flow passage 25 which are not communicated with each other. A first through-hole is defined in a chamber wall of the first sub-flow passage 24, and a second through-hole is defined in a chamber wall of the second sub-flow passage 25. The cooling plate 100 further includes a liquid inlet pipe 22 and a liquid outlet pipe 23, the liquid inlet pipe 22 is communicated with the first through-hole, and the liquid outlet pipe 23 is communicated with the second through-hole. The first sub-flow passage 24 is communicated with the liquid inlet end, and the second sub-flow passage 25 is communicated with the liquid outlet end.

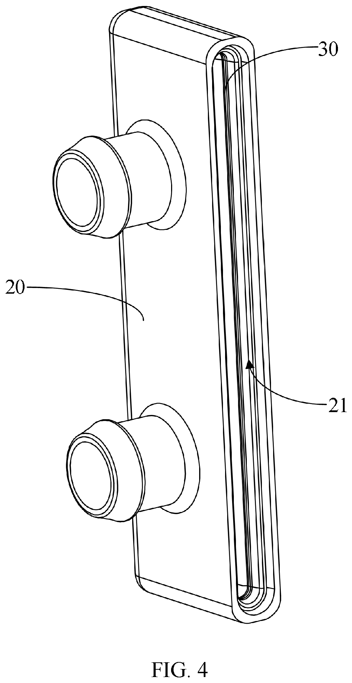

In some embodiments, referring to FIG. 4, a cooling channel is defined in the cooling pipe 10, and the cooling channel includes a plurality of sub-channels 13 spaced along a height of the cooling plate 100. The plurality of sub-channels 13 extends along a length of the cooling plate 100. A portion of the sub-channels 13 is communicated with the first sub-flow passage 24, and a portion of the sub-channels 13 is communicated with the second sub-flow passage 25.

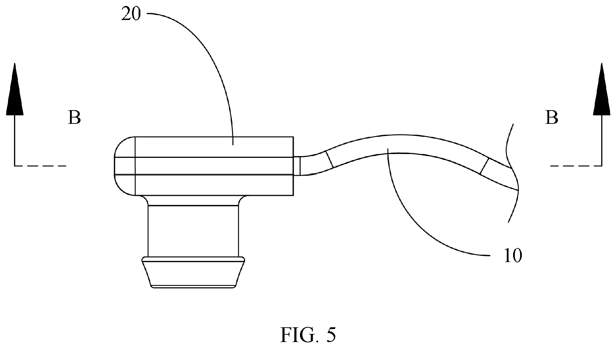

Specifically, in the present embodiment, the cooling plate 100 further includes a second end 15, and the second end 15 is provided with a communication block 50 through which the plurality of sub-channels 13 is communicated with the pipe joint 20. Specifically, the pipe joint 20 is provided at an end of the cooling pipe 10, and the communication block is provided at another end of the pipe joint 20. In the actual cooling process, referring to FIGS. 5-6, the cooling medium enters the first sub-flow passage 24 from the liquid inlet pipe 22, enters the portion of the sub-channel 13 communicated with the first sub-flow passage 24 from the first sub-flow passage 24, enters the communication block 50, flows into the remaining portion of the sub-channel 13 communicated with the second sub-flow passage 25 through the communication block 50, and flows into the liquid outlet pipe 23 to complete the cooling cycle.

Note that in the cooling process, as the cooling medium flows, a temperature of the cooling medium increases continuously, that is, a temperature of the cooling medium in the liquid inlet pipe 22 is lower than a temperature of the cooling medium in the liquid outlet pipe 23. In the present embodiment, the cooling medium in the cooling channel can flow through the same battery at least twice in succession, the battery through which the cooling medium is earlier flowed in the first time is flowed through by the cooling medium again later, and the battery through which the cooling medium is later flowed in the first time is flowed through by the cooling medium again earlier. In the cooling process, the temperature of the cooling medium is gradually increased, and the cooling effect is gradually decreased. Therefore, the battery having a better cooling effect in the first flowing of the cooling medium has a less cooling effect in the second flowing of the cooling medium, and vice versa. As such, the back- and-forth cooling effects are superimposed, and the cooling effects obtained by the batteries in the same row can be balanced. Thus, a plurality of batteries is in an even temperature state, a phenomenon of local high temperature is avoided, and a service life of the plurality of batteries is prolonged.

It should be noted that the type of the cooling medium in the above-mentioned embodiment is not limited, and may be selected according to actual application. For example, the cooling medium may be a lubricating oil, may be water, may be cold air, may be an alcohol compound, or the like.

Referring to FIG. 2 and FIG. 4, in some embodiments, an end of the cooling pipe 10 is snapped into the receiving chamber 21, and the sealing member 30 is located in the receiving chamber 21 and is sleeved on a periphery of the cooling pipe 10. The sealing member 30 is clamped and fixed between the cooling pipe 10 and the pipe joint 20, thereby ensuring a sealing effect between the pipe joint 20 and the cooling pipe 10.

In some embodiments, the sealing member 30 includes a sealing ring, a material of which includes any one of EPDM (ethylene propylene diene monomer), TPE (elastomer), or NBR (nitrile rubber). The above-mentioned materials have good impact resistance and are stable in chemical properties.

To improve the sealing performance of the cooling plate 100, in the present embodiment, the sealing member 30 is integrally formed with the pipe joint 20. It should be noted that the manner in which the sealing member 30 and the pipe joint 20 are formed is not limited, and may be selected according to actual conditions. For example, in some embodiments, the sealing member 30 and the pipe joint 20 are integrally formed using vulcanization. In other embodiments, the sealing member 30 and the pipe joint 20 are integrally formed by injection molding.

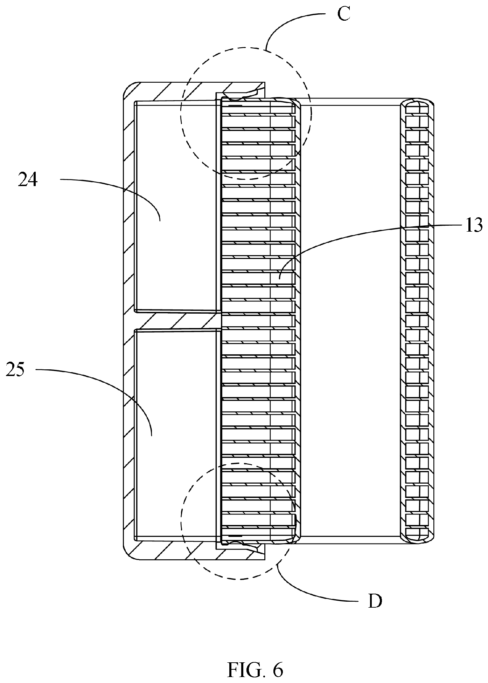

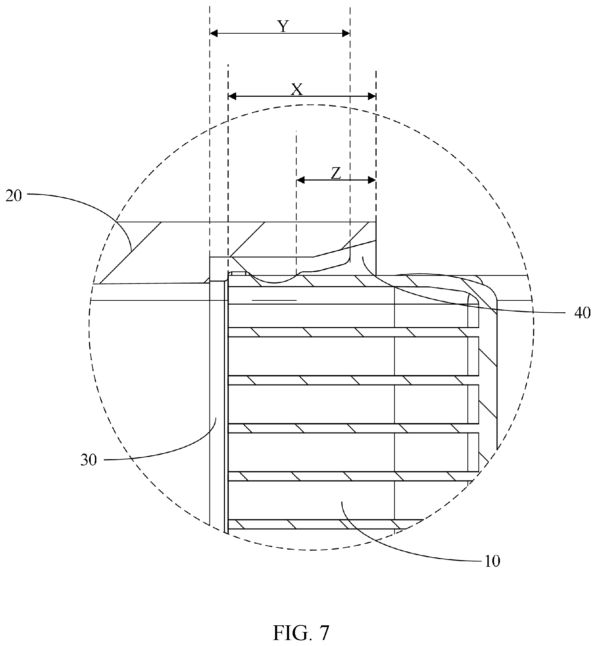

Alternatively, a size of the sealing member 30 needs to be adapted to a size of the cooling pipe 10 and a size of the pipe joint 20. In case that the size of the sealing member 30 is too large, it is difficult to snap the cooling pipe 10 into the pipe joint 20, and even the cooling pipe 10 cannot be snapped into the pipe joint 20. In case that the size of the sealing member 30 is too small, the sealing effect is poor due to a gap between the cooling pipe 10 and the pipe joint 20. Specifically, referring to FIG. 6 and FIG. 7, a length of a portion of the cooling pipe 10 coincided with the pipe joint 20 is X, a length of the sealing member 30 is Y, and a thickness of the sealing member 30 is a, and X,Y and a satisfy: a+1≤Y≤X-1. When Y is less than a+1, the length of the sealing member 30 is too small, and in use, a slight displacement of the sealing member 30 causes the sealing member 30 to deform and not function as a sealing. When Y is greater than X-1, the length of the sealing member 30 is too long, and a space of the receiving chamber 21 occupied on the pipe joint 20 is increased, which affects a flowing rate of the cooling medium and causes the cooling effect of the cooling plate 100 to be reduced. For example, in an embodiment, the length of the sealing member 30 is 3 mm, the thickness of the sealing member 30 is 1 mm, and the length of the portion of the cooling pipe 10 coincided with the pipe joint 20 is 5 mm. At this time, the length of the sealing member 30 meets the requirements of the relationship a+1≤Y≤X-1.

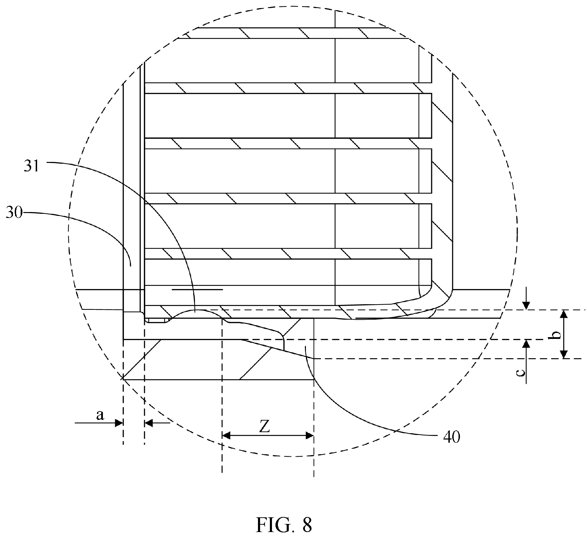

To ensure the sealing effect, the sealing member 30 is in an interference fit with the cooling pipe 10. When the cooling pipe 10 is inserted into the pipe joint 20, the cooling pipe 10 extrudes the sealing member 30 to cause a deform of the sealing member 30 in a thickness direction thereof. When the cooling pipe 10 is snapped into, the sealing member 30 rebounds to position between the cooling pipe 10 and the pipe joint 20, thereby improving the sealing effect. Specifically, referring to FIG. 6 and FIG. 8, the thickness of the sealing member 30 cannot be too thick or too thin. In case that the thickness of the sealing member 30 is too thick, the cooling pipe 10 cannot be inserted into the pipe joint 20. In case that the thickness of the sealing member 30 is too thin, the sealing effect is poor due to an insufficient rebound of the sealing member 30. Specifically, the thickness of the sealing member 30 is a, an original thickness of the sealing member 30 including an interference magnitude is b, and an interference magnitude of the sealing member 30 is d, where a, b, and d satisfy: d= (b-a)/b, 20%≤d≤90%. Specifically, d may be 20%, 25%, 30%, 32%, 35%, 38%, 40%, 45%, 48%, 50%, 55%, 65%, 70%, 80%, 90%, or other data not listed.

In a specific embodiment, the sealing member 30 has the thickness of 1 mm and the original thickness of the sealing member 30 including the interference magnitude is 2 mm, as such, the interference magnitude of the sealing member 30 is 50%, which meets the range requirements of d.

It should be noted that the manner in which the sealing member 30 is matched with the cooling pipe 10 is not limited, as long as an interference fit between the sealing member 30 and the cooling pipe 10 can be ensured.

In some embodiments, the sealing member 30 is defined with a through-hole, a wall of the through-hole is provided with a snap-in protrusion 31, and the snap-in protrusion 31 abuts against an end of the cooling pipe 10 to set the interference fit between the pipe joint 20 and the cooling pipe 10. In the actual installation process, when the cooling pipe 10 is snaped to the pipe joint 20, the cooling pipe 10 extrudes the snap-in protrusion 31, and the snape-in protrusion 31 is deformed. When the cooling pipe 10 is snaped to a proper position, the snap-in protrusion 31 rebounds to abut against a periphery of the cooling pipe 10, thereby realizing the interference fit between the pipe joint 20 and the cooling pipe 10, and improving the reliability of the connection between the cooling pipe 10 and the pipe joint 20.

In some embodiments, to improve the connection effect, the cooling plate 100 further includes a glue layer 40 provided at an opening of the receiving chamber 21 of the pipe joint 20. The glue layer 40 may be filled between the sealing member 30 and the cooling pipe 10 and filled between the cooling pipe 10 and the pipe joint 20, thereby improving the sealing performance of the cooling plate 100.

Alternatively, an end of the glue layer 40 abuts an end of the snap-in protrusion 31 toward the opening of the pipe joint 20, and another end of the glue layer 40 extends to the opening of the pipe joint 20. With this arrangement, not only the sealing effect of the cooling plate 100 can be improved, but also an internal blockage of the pipe joint 20 due to a penetration of the glue layer 40 into an inside of the pipe joint 20 can be avoided.

A material of the glue layer 40 includes any one of polyurethane glue, epoxy series glue, and acrylic series glue, and may be selected according to actual conditions. Specifically, after the cooling pipe 10 is snaped into the pipe joint 20, the cooling plate 100 is vertically placed (the opening of the pipe joint 20 is upward) for injecting a glue into the receiving chamber 21 of the pipe joint 20 until the glue is flush with the opening of the receiving chamber 21 of the pipe joint 20. After the glue is solidified to form the glue layer 40, the cooling plate 100 is placed horizontally. As such, the glue layer 40 can be filled between the sealing member 30 and the cooling pipe 10 and filled between the cooling pipe 10 and the pipe joint 20 to avoid a gap therebetween, thereby improving the sealing performance of the cooling plate 100.

In some embodiments, a maximum of a thickness of the glue layer 40 is c, and the thickness of the sealing member 30 is a, and a and c satisfy: c>a. It should be noted that when c is less than a, the thickness of the glue layer 40 is too small, resulting in a leakage problem due to an area between the cooling pipe 10 and the pipe joint 20 to be unsealed.

In some embodiments, a length of the glue layer 40 is Z, and 1≤Z≤X-a-1. When Z is less than 1 mm, the length of the glue layer 40 is short, and there is a gap between the cooling pipe 10 and a portion of the pipe structure near the opening, causing a leakage easily. When Z is greater than X-a-1, the length of the glue layer 40 is too long, which occupies space, wastes resources, and increases cost.

In an embodiment, the thickness of the sealing member 30 is 1 mm, the length of the glue layer 40 is 5 mm, the length of the glue layer 40 is 3 mm, which satisfies the above-mentioned relationship and meets the requirements.

In some embodiments, the cooling pipe 10 includes an aluminum pipe, which is light in material and strong in corrosion resistance and can extend the service life of the cooling plate 100. It should be noted that the cooling pipe 10 may be a copper pipe and may be selected according to actual conditions.

In some embodiments, the cooling plate 100 is provided with a plurality of curved sections 11 which are adapted to a periphery of the battery, so that the cooling plate 100 can be brought into close contact with the battery to improve the cooling effect.

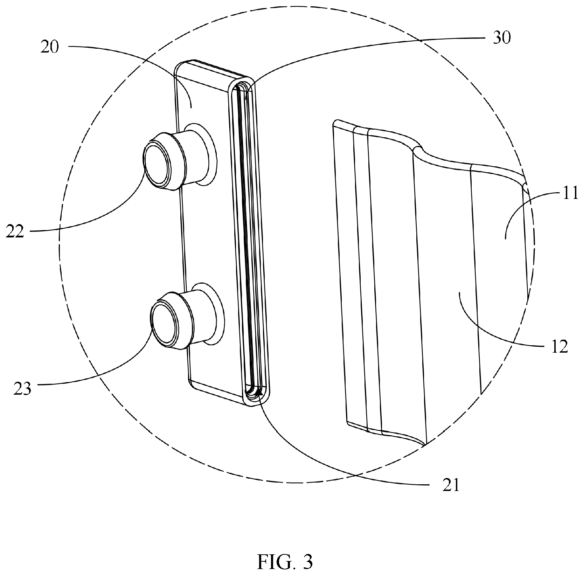

Referring to FIG. 2 and FIG. 3, the cooling pipe 10 further includes a connecting section 12 located between any two curved sections 11, and the connecting section 12 smoothly transitions the two curved sections 11. It should be noted that a shape of the connecting section 12 is not limited, and may be selected according to actual conditions. For example, when two adjacent batteries are closely aligned, the connecting section 12 is an arcuate section, facilitating the arrangement of the batteries. When a gap groove is defined between two adjacent batteries, the connecting section 12 is a straight line section to facilitate heat dissipation.

It should be noted that the cooling plate 100 provided in the present application can be applied to a plurality of different types of batteries. In some embodiments, when the battery to be cooled is in a cylindrical shape, the curved section 11 is arcuate. In other embodiments, when the battery to be cooled is in a square shape, the curved section 11 is square. In some embodiments, when the battery to be cooled is in a long blade shape, the curved section 11 is rectangular.

According to a second aspect of the present application, a direct cooling assembly is provided, and the direct cooling assembly includes at least one cooling plate 100 as described above. Detailed structures of the cooling plate 100 are described with reference to the above-mentioned embodiments. Since the direct cooling assembly adopts all the technical solutions of the above-described embodiments, the direct cooling assembly has at least all the beneficial effects of the technical solutions of the above-described embodiments. Details are not described herein.

In some embodiments, a plurality of cooling plates 100 are provided, and the plurality of cooling plates 100 are provided at intervals. A cooling cavity is defined between two adjacent cooling plates 100, the cooling cavity is used to receive the battery, and the battery can be cooled by the cooling plates 100 from two sides. As such, the cooling efficiency is high. At the same time, each cooling plate 100 is provided with the plurality of curved sections 11, and the plurality of curved sections 11 are adapted to the periphery of the battery, so that the cooling plates 100 can be brought into close contact with the battery, thereby improving the cooling effect.

The present application also provides a battery pack including a plurality of batteries and the direct cooling assembly. The plurality of batteries is provided between two adjacent cooling plates 100. Detailed structures of the direct cooling assembly are described with reference to the above-mentioned embodiments. Since the battery pack adopts all the technical solutions of all the above-mentioned embodiments, the battery pack has at least all the beneficial effects of the technical solutions of the above-mentioned embodiments. Details are not described herein.

In addition, the present application also provides an electric device including the battery pack. Detailed structures of the battery pack are described with reference to the above-mentioned embodiments. Since the electric device adopts all the technical solutions of all the above-mentioned embodiments, the electric device has at least all the beneficial effects of the technical solutions of the above-mentioned embodiments. Details are not described herein.

It should be understood that the electric device includes, but are not limited to, an electric toy, a power tool, an electromobile, a vehicle, a ship, a spacecraft, and the like. Among them, the electric toy may include a stationary or mobile electric toy, for example, a game machine, an electric automobile toy, an electric boat toy, an electric airplane toy, and the like; the spacecraft may include an airplane, a rocket, a space shuttle, a spacecraft, and the like; and the vehicle may be a fuel vehicle, a gas vehicle, and a new energy vehicle.

## Claims

1. A cooling plate (100), comprising:
a cooling pipe (10);
at least one pipe joint (20) connected to an end of the cooling pipe (10) to communicate with the cooling pipe (10); and
a sealing member (30) disposed between the pipe joint (20) and the end of the cooling pipe (10).

2. The cooling plate (100) according to claim 1, wherein the pipe joint (20) comprises a plastic pipe joint and the cooling pipe (10) comprises a metal cooling pipe.

3. The cooling plate (100) according to claim 2, wherein a material of the pipe joint (20) comprises any one of PA66, PPS, PPE, and PA12.

4. The cooling plate (100) according to claim 1, wherein the pipe joint (20) is provided with a receiving chamber (21) for receiving the end of the cooling pipe (10), and wherein the sealing member (30) is located in the receiving chamber (21) and is sleeved on a periphery of the cooling pipe (10).

5. The cooling plate (100) according to claim 2, wherein the sealing member (30) is integrally formed with the pipe joint (20).

6. The cooling plate (100) according to any one of claims 1 to 5, wherein a length of a portion of the cooling pipe (10) coincided with the pipe joint (20) is X, a length of the sealing member (30) is Y, and a thickness of the sealing member (30) is a, and wherein X, Y and a satisfy: a+1≤Y≤X-1.

7. The cooling plate (100) according to any one of claims 1 to 5, wherein a thickness of the sealing member (30) is a, an original thickness of the sealing member (30) including an interference magnitude is b, and the interference magnitude of the sealing member (30) is d, and wherein a, b and d satisfy: d= (b-a)/b, and 20%≤d≤90%.

8. The cooling plate (100) according to any one of claims 1 to 5, wherein the sealing member (30) is provided with a through-hole, a snap-in protrusion (31) is provided on a wall of the through-hole, and the snap-in protrusion (31) abuts against the end of the cooling pipe (10) to set an interference fit between the pipe joint (20) and the cooling pipe (10).

9. The cooling plate (100) according to claim 8, further comprising a glue layer (40) disposed between the sealing member (30) and the cooling pipe (10), an end of the glue layer (40) abuts against an end of the snap-in protrusion (31) towards an opening of the pipe joint (20), and another end of the glue layer (40) extends to the opening of the pipe joint (20).

10. The cooling plate (100) according to claim 9, wherein a maximum of a thickness of the glue layer (40) is c and a thickness of the sealing member (30) is a, and wherein a and c satisfy: c>a.

11. The cooling plate (100) according to claim 10, wherein a length of the glue layer (40) is Z and a length of a portion of the cooling pipe (10) coincided with the pipe joint (20) is X, and wherein Z, X and a satisfy: 1≤Z≤X-a-1.

12. The cooling plate (100) according to claim 9, wherein a material of the glue layer (40) comprises any one of a polyurethane glue, an epoxy series glue, and an acrylic series glue.

13. The cooling plate (100) according to any one of claims 1 to 5, wherein the cooling pipe (10) comprises a first end (14), and a liquid inlet end of the cooling pipe and a liquid outlet end of the cooling pipe are provided at the first end (14).

14. The cooling plate (100) according to any one of claims 1 to 5, wherein a first sub-flow passage (24) and a second sub-flow passage (25) are defined in the pipe joint (20), and the first sub-flow passage (24) and the second sub-flow passage (25) are not communicated; and
wherein the cooling plate (100) further comprises a liquid inlet pipe (22) and a liquid outlet pipe (23), the liquid inlet pipe (22) is communicated with the first sub-flow passage (24), and the liquid outlet pipe (23) is communicated with the second sub-flow passage (25).

15. The cooling plate (100) according to claim 14, wherein a plurality of sub-channels (13) are formed in the cooling pipe (10), the plurality of sub-channels (13) are arranged at intervals along a height direction of the cooling plate (100), a portion of the sub-channels (13) is communicated with the first sub-flow channel (24), and a portion of the sub-channels (13) is communicated with the second sub-flow channel (25).

16. The cooling plate (100) according to claim 15, wherein the cooling pipe (10) further comprises a second end (15), the second end (15) is provided with a communication block (50), and the plurality of sub-channels (13) is communicated with the pipe joint (20) through the communication block (50).

17. The cooling plate (100) according to any one of claims 1 to 5, wherein the cooling pipe (10) is provided with a plurality of curved sections (11), and the plurality of curved sections (11) has a shape adapted to a periphery of a battery.

18. The cooling plate (100) according to claim 17, wherein the cooling pipe (10) further comprises a connecting section (12), the connecting section is provided between any two of the plurality of curved sections (11), and the connecting section (12) smoothly transitions and connects any two of the plurality of curved sections (11).

19. A direct cooling assembly, comprising the cooling plate (100) according to any one of claims 1 to 18.

20. The direct cooling assembly according to claim 19, wherein the cooling plate (100) is provided with a plurality of cooling plates (100) arranged at intervals, a cooling cavity is defined between two adjacent cooling plates (100) of the plurality of cooling plates (100), and the cooling cavity is configured to receive a battery.

21. A battery pack, comprising the cooling plate (100) according to any one of claims 1 to 18 or comprising the direct cooling assembly according to any one of claims 19 to 20.
